## Europäisches Patentamt
## European Patent Office
## Office européen des brevets

(19)

(11) Numéro de publication : **0 331 559 B1**

(12)

# FASCICULE DE BREVET EUROPEEN

(45) Date de publication du fascicule du brevet :
29.05.91 Bulletin 91/22

(51) Int. Cl.⁵ : **H02K 49/04**

(21) Numéro de dépôt : 89400498.5

(22) Date de dépôt : 22.02.89

(54) **Ensemble constitué par un ralentisseur électromagnétique et par ses moyens d'alimentation électrique.**

(30) Priorité : 25.02.88 FR 8802301

(43) Date de publication de la demande :
06.09.89 Bulletin 89/36

(45) Mention de la délivrance du brevet :
29.05.91 Bulletin 91/22

(84) Etats contractants désignés :
AT BE CH DE ES FR GB IT LI NL SE

(56) Documents cités :
EP-A- 0 228 326
DE-B- 1 086 335
DE-B- 1 296 986
GB-A- 2 088 647
US-A- 3 889 140

(73) Titulaire : **LABAVIA S.G.E.**
**5, avenue Newton Parc d'Activités**
**F-78180 Montigny le Bretonneux (FR)**

(72) Inventeur : **Even, Denis**
**34, Mail Mendès-France**
**F-95000 Cergy Pontoise (FR)**

(74) Mandataire : **Behaghel, Pierre et al**
**CABINET PLASSERAUD 84 rue d'Amsterdam**
**F-75009 Paris (FR)**

## Description

L'invention est relative aux ensembles constitués par un ralentisseur électromagnétique destiné à freiner un arbre de transmission de véhicule et par ses moyens d'alimentation électrique, ensembles comportant un stator traversé par l'arbre, lequel est centré dans ce stator par des moyens de guidage appropriés, et un rotor solidarisable avec l'arbre de façon à présenter une face cylindrique externe à proximité d'une face cylindrique interne du stator avec interposition d'un entrefer de faible épaisseur, le rotor comportant un inducteur, à bobines de fil électrique, propre à engendrer par son excitation électrique un champ magnétique à répartition alternée dans une pièce ferromagnétique annulaire du stator constituant l'induit et associée à un circuit de refroidissement par liquide, et l'alimentation électrique des bobines étant assurée à l'aide d'un alternateur polyphasé, notamment triphasé, dont l'induit fait partie du rotor ci-dessus et est connecté auxdites bobines par l'intermédiaire d'un redresseur faisant également partie dudit rotor, la couronne statorique composée par les pôles inducteurs de l'alternateur entourant avec un faible jeu l'induit rotorique de cet alternateur et les deux couronnes rotoriques composées respectivement par les bobines inductrices du ralentisseur et par l'induit de l'alternateur étant juxtaposées axialement sur la face extérieure d'un même manchon intérieur de relativement grand diamètre intérieur prolongé intérieurement par une bride de raccordement transversale.

Un tel ensemble a été décrit dans le brevet France n° 1 467 310.

Dans cet ensemble, le ralentisseur est monté sur un tronçon, de l'arbre de transmission de véhicule concerné, relativement éloigné du moteur : ce tronçon est lui-même monté entre deux roulements à billes portés par deux flasques transversaux délimitant les extrémités axiales du stator, alors en forme de caisson cylindrique, et il est raccordé au reste de l'arbre par deux joints homocinétiques.

Le rotor de l'appareil se présente alors sous la forme d'un noyau massif rapporté sur ledit tronçon d'arbre central et prolongé radialement vers l'extérieur par les bobines inductrices, en petit nombre (typiquement six).

Une telle construction ne se prête pas à un montage direct en porte-à-faux sur la sortie de la boîte de vitesses du véhicule, montage selon lequel le stator est monté en porte-à-faux sur le carter de la boîte et le rotor est monté en porte-à-faux sur un embout d'arbre sortant de ladite boîte, ce rotor étant par ailleurs solidarisé avec un élément d'un accouplement à cardan permettant de le raccorder au reste de l'arbre de transmission.

Or ce montage en porte-à-faux, qui a été décrit dans les brevets France n° 1 456 903 et 1 493 757, est particulièrement précieux vu qu'il rend possible l'utilisation d'un ralentisseur électromagnétique sur une transmission très courte telle que celles équipant les tracteurs de semi-remorques ou les cars à cabine avancée.

La présente invention a pour but, surtout, de rendre les ralentisseurs du genre ci-dessus tels qu'ils se prêtent à un tel montage en porte-à-faux.

A cet effet, les ensembles du genre défini ci-dessus sont essentiellement caractérisés, selon l'invention, en ce que la bride est solidaire de l'une des deux mâchoires d'un accouplement à cardan faisant partie de l'arbre et logé à l'intérieur du manchon, mâchoire elle-même montée en porte-à-faux sur l'extrémité d'un tronçon, dudit arbre, qui sort du carter de la boîte de vitesses du véhicule et est supporté par ce carter par l'intermédiaire de roulements, en ce que le stator est porté par une ossature ajourée en cloche elle-même montée en porte-à-faux sur ledit carter et en ce que le nombre des bobines inductrices du ralentisseur et celui des pôles inducteurs de l'alternateur sont tous deux supérieurs ou égaux à douze.

Le montage indiqué permet de placer l'induit statorique du ralentisseur, à refroidir par liquide, très près du moteur du véhicule et en particulier du circuit normal de refroidissement par eau de celui-ci.

Dans des modes de réalisation préférés, on a recours en outre à l'une et/ou à l'autre des dispositions suivantes :

– l'extrémité axiale, du rotor du ralentisseur, la plus éloignée du rotor de l'alternateur, est prolongée axialement par une structure ailetée de ventilation du stator lu ralentisseur,

– le nombre des bobines inductrices du ralentisseur est égal à 18 et le nombre des pôles inducteurs de l'alternateur, à 24.

L'invention comprend, mises à part ces dispositions principales, certaines autres dispositions qui s'utilisent de préférence en même temps et dont il sera plus explicitement question ci-après.

Dans ce qui suit, l'on va décrire un mode de réalisation de l'invention en se référant au dessin ci-annexé d'une manière bien entendu non limitative.

La figure 1, de ce dessin, montre schématiquement l'ensemble, établi conformément à l'invention, d'un ralentisseur électromagnétique de véhicule et de ses moyens d'excitation électrique.

La figure 2 montre le même ensemble en vue perspective, portions arrachées.

La figure 3 montre schématiquement le montage d'un tel ralentisseur sur la boîte de vitesses du véhicule.

Le ralentisseur électromagnétique considéré est destiné à ralentir l'arbre rotatif d'un véhicule, de préférence du type "poids lourd".

D'une façon connue en soi, ce ralentisseur comprend un rotor 2 solidarisé en rotation avec l'arbre de sortie 1 de la boîte de vitesses 30 du véhicule et un stator 3 monté en porte-à-faux sur le carter 31 de cette boîte.

Mais contrairement à ce qui est habituellement envisagé, c'est ici l'inducteur qui est monté rotatif, l'induit étant fixe.

En d'autres termes :
– les enroulements ou bobines de fil électrique 4 qui conduisent le courant électrique d'excitation du ralentisseur et qui, avec des noyaux radiaux 4' qu'ils entourent, définissent une couronne de pôles inducteurs à polarités alternées de proche en proche, font partie du rotor 2,
– et la pièce annulaire 5 en matériau ferromagnétique qui constitue l'induit et dans laquelle sont engendrés les courants de Foucault générateurs de freinage et d'échauffement fait partie du stator 3.

Cette pièce annulaire 5 est constituée par un tambour cylindrique entourant l'inducteur avec interposition d'un entrefer cylindrique E.

Comme cette pièce 5 est ici fixe, elle peut être facilement refroidie à l'aide d'un courant de liquide puisqu'il n'est pas nécessaire d'avoir recours à des joints spéciaux destinés à assurer l'étanchéité au niveau de raccords entre deux pièces en mouvement relatif.

On prévoit à cet effet un circuit de liquide 6 comportant un tronçon 7 qui longe directement la face, de la pièce induite 5, opposée à l'entrefer E.

Plus précisément ledit tronçon 7 est ici formé par une canalisation s'étendant selon une hélice autour du tambour 5, canalisation terminée à ses deux extrémités par deux raccords d'entrée 8 et de sortie 9.

Pour améliorer l'échange thermique entre le tambour 5 et le liquide circulant dans la canalisation 7, on peut prévoir sur la face, du tambour, délimitant une paroi dudit tronçon, des creux ou reliefs tels que des stries annulaires ou hélicoïdales 10.

De tels creux ou reliefs peuvent également être prévus sur les autres parois dudit tronçon.

Selon une variante, le tronçon de circuit 7 est constitué par une simple chemise d'eau annulaire délimitée par deux parois cylindriques coaxiales raccordées entre elles d'une part à leurs extrémités axiales par deux rondelles transversales et d'autre part par une cloison longitudinale radiale séparant l'entrée de la sortie.

Le circuit de refroidissement 6 comprend, en plus du tronçon 7, une pompe d'entraînement 11 et un échangeur thermique extérieur 12, tel qu'un radiateur à ailettes, permettant de dissiper vers l'extérieur les calories portées par le liquide en circulation.

Ce liquide est avantageusement constitué par de l'eau additionnée d'anti-gel.

La pompe 11 et l'échangeur 12 sont avantageusement la pompe à eau et le radiateur qui font partie du circuit normal de refroidissement du moteur du véhicule : il est à noter en effet que, lors du fonctionnement du ralentisseur, le moteur dégage peu de calories de sorte que ses besoins de refroidissement sont alors réduits ; de plus, du fait que le ralentisseur est monté sur la boîte de vitesses 30 du véhicule, il se trouve très proche dudit circuit normal de refroidissement.

Les axes des bobines 4 qui définissent les pôles inducteurs s'étendent ici radialement autour de l'axe de l'appareil.

Cet inducteur étant rotatif, il convient de prévoir des moyens spéciaux pour alimenter ses bobines 4 en courant électrique.

On a recours à cet effet à une machine tournante génératrice d'électricité dont le rotor est solidarisé avec celui 2 du ralentisseur.

En effet, lorsqu'il existe un besoin de ralentir l'arbre 1, celui-ci tourne : à cette rotation de l'arbre 1 correspond une énergie inutilisée et l'on transforme ici une portion de cette énergie en le courant électrique nécessaire pour alimenter l'inducteur du ralentisseur.

On obtient de ce fait à la fois les deux avantages suivants :
– on alimente l'inducteur du ralentisseur moyennant un apport d'énergie électrique extérieur très faible, cette énergie étant limitée à celle nécessaire à l'alimentation de l'excitatrice de la génératrice : dans le cas préféré d'un ralentisseur de véhicule, l'énergie d'excitation prélevée sur la batterie de ce véhicule est de l'ordre de 30 % seulement de celle nécessitée par l'alimentation du ralentisseur dans les réalisation habituelles et peut même être nettement plus faible,
– la génération du courant électrique d'alimentation de l'inducteur du ralentisseur consomme par elle-même une certaine énergie mécanique qui est prélevée sur l'arbre à ralentir : cette consommation contribue par elle-même à freiner ledit arbre.

Dans le mode de réalisation préféré illustré, la génératrice est un alternateur comportant :
– un rotor triphasé 13 constituant l'induit de cet alternateur,
– et un stator inducteur 14 à pôles multiples entourant le rotor 13 avec un faible jeu formant entrefer e.

La liaison électromagnétique entre ce rotor 13 et ce stator 14 est effectuée exclusivement à travers cet entrefer e, sans aucun contact mécanique du type à bague et balai.

Les pôles multiples du stator sont créés par une couronne de petits électro-aimants à polarités alternées reliés à une source de courant continu 15 telle que la batterie du véhicule si le ralentisseur considéré équipe un tel véhicule.

Cette liaison est effectuée à travers un circuit de réglage 16 permettant de régler à volonté l'intensité du courant d'excitation de l'inducteur 14, et par suite l'intensité du courant électrique engendré par l'alternateur, et en définitive le couple de freinage appliqué sur le rotor du ralentisseur et donc sur l'arbre 1.

Ce circuit 16 comporte avantageusement un organe de commande manuelle 17.

Le courant alternatif recueilli aux bornes du rotor 13 est redressé par un pont approprié 18 avant d'être appliqué sur les bobines 4 du ralentisseur.

Bien entendu l'ensemble des composants 18 fait partie du rotor 2 au même titre que les bobines 4 et que l'induit 13.

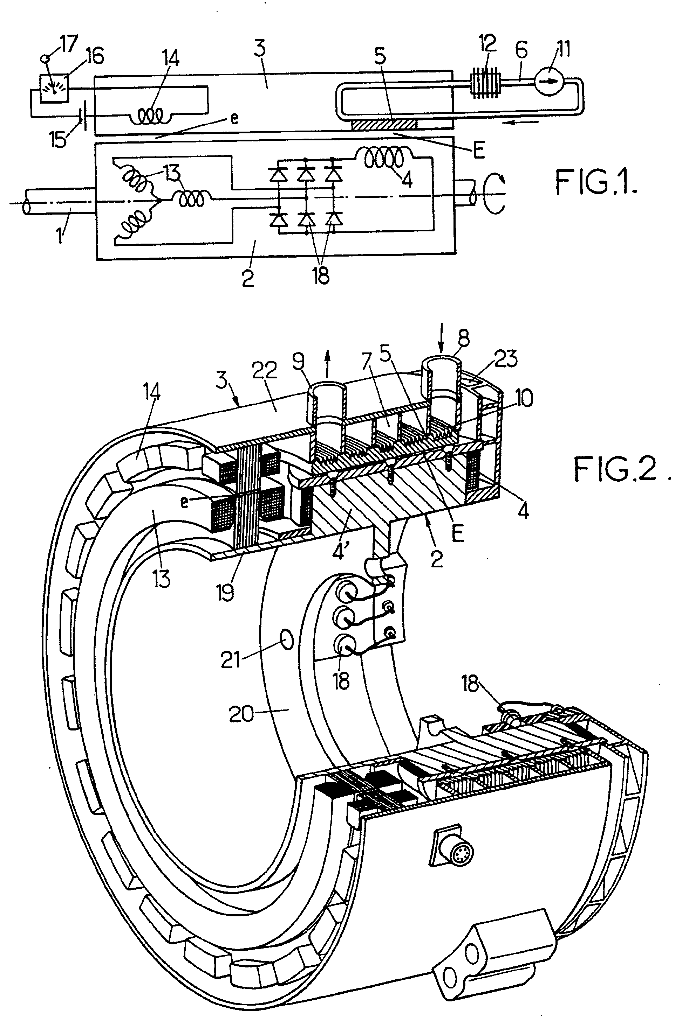

Comme bien visible sur la figure 2, cet induit 13 est solidarisé avec les bobines 4 du ralentisseur, l'ensemble de ces éléments étant monté sur un même manchon 19 prolongé intérieurement par un voile transversale 20 lui-même évidé par des trous de fixation 21 et formant bride de raccordement à un plateau 32 solidaire de l'arbre 1. Ce manchon 19 peut former une seule pièce avec les noyaux 4' et avec la bride 20.

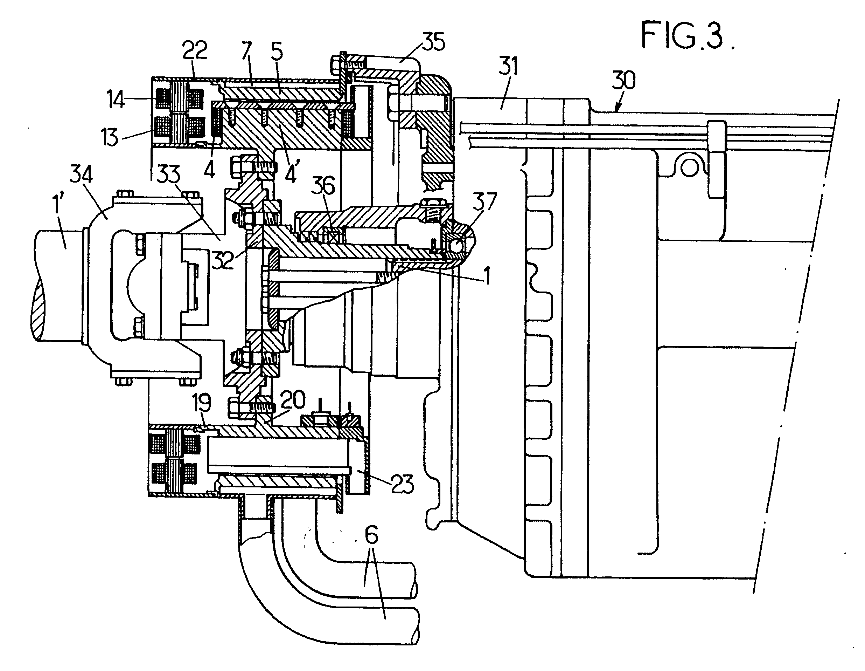

Le plateau 32 est à son tour solidaire de l'une des deux mâchoires 33 d'un accouplement à cardan dont l'autre mâchoire 34 est solidaire du tronçon principal 1' de l'arbre de transmission : comme visible sur la figure 3, ces deux mâchoires 33 et 34 sont logées librement à l'intérieur du tube formé par le manchon 19.

Le stator 14 est, quant à lui, monté à l'intérieur d'un manchon fixe 22 délimitant l'extérieur du tronçon de canalisation 7 ci-dessus : c'est ce manchon 22 qui est monté en porte-à-faux sur le carter 31 de la boîte 30 à l'aide d'une ossature ajourée en cloche 35 telle qu'une couronne de bras.

Bien entendu, l'arbre 1 de sortie de la boîte est rigoureusement centré dans celle-ci, notamment à l'aide de roulements 36, 37, pour que le rotor 2 et le stator 3 soient centrés mutuellement et que soient formés entre eux les entrefers annulaires E et e ci-dessus.

On voit encore sur les figures 2 et 3 une structure ailetée 23 formant ventilateur et rapportée sur l'extrémité axiale, du rotor 2, la plus éloignée de l'induit 13 : cette structure permet d'envoyer un courant d'air de refroidissement entre les bobines 4 du ralentisseur, ce qui contribue à l'évacuation des calories engendrées dans le tambour 5.

Le nombre des bobines inductrices 4 et celui des pôles 14 de la génératrice sont relativement élevés, savoir au moins égaux à douze, pour permettre de dégager à l'intérieur de la machine un espace de grand diamètre pour le passage de l'arbre 1 à ralentir : en effet, plus ces nombres sont élevés, plus il est possible de donner aux bobines et pôles correspondants des petites longueurs radiales ; ces deux nombres sont par exemple ici respectivement de dix-huit et de vingt-quatre.

En suite de quoi, et quel que soit le mode de réalisation adopté, on dispose finalement d'un ralentisseur électromagnétique dont la constitution résulte suffisamment de ce qui précède.

Le fonctionnement de ce ralentisseur est très facilement commandé par simple excitation de l'inducteur fixe 14 de la génératrice, excitation qui est de préférence commandée à l'aide de l'organe 17.

Ledit ralentisseur présente de nombreux avantages par rapport à ceux antérieurement connus, et en particulier les suivants :

– son montage en porte-à-faux sur la boîte 30 permet de l'utiliser même pour des transmissions très courtes,

– le refroidissement de l'induit 5, fixe, du ralentisseur, par un courant de liquide est facile du fait de sa proximité du circuit de refroidissement à eau normal du véhicule et il est extrêmement efficace, ce qui permet d'obtenir un excellent couple de ralentissement en régime de croisière étant donné que ce couple est d'autant plus élevé que la température de l'induit demeure plus basse,

– l'énergie puisée sur la batterie 15 ou autre source de courant continu est relativement faible vu que cette énergie se limite à celle nécessaire à l'alimentation de l'inducteur 14 de la génératrice, l'alimentation des bobines inductrices 4 du ralentisseur étant intégralement engendrée à partir de la rotation de l'arbre 1 : dans la pratique, cette énergie prise sur la batterie est généralement inférieure au tiers de celle requise pour les réalisations à induit rotatif,

– l'excitation du ralentisseur est progressive et continue, ce qui se traduit par une variation semblable du couple de freinage exercée par ledit ralentisseur sur l'arbre à freiner.

Comme il va de soi, et comme il résulte d'ailleurs déjà de ce qui précède, l'invention ne se limite nullement à ceux de ses modes d'application et de réalisation qui ont été plus spécialement envisagés ; notamment :

– celles où l'alternateur (13, 14) serait d'un type polyphasé autre que triphasé, notamment de type diphasé ou hexaphasé,

– celles où la face intérieure du manchon intérieur (19) ne serait pas cylindrique, étant par exemple évasée vers son extrémité opposée à la boîte (30),

– celles où la face extérieure du manchon extérieure (22) ne serait pas cylindrique, étant par exemple convergente ou divergente vers son extrémité opposée à la boîte (30),

– celles où l'un et/ou l'autre des deux manchons (19 et 22) serait composé de plusieurs éléments rapportés axialement l'un sur l'autre, par exemple par emmanchement mutuel comme visible sur la figure 3.

## Revendications

1. Ensemble constitué par un ralentisseur électromagnétique destiné à freiner l'arbre de transmission (1, 1') d'un véhicule et par ses moyens d'alimentation électrique, comportant un stator (3) traversé par l'arbre, lequel est centré dans ce stator par des moyens de guidage appropriés, et un rotor (2) solidarisable avec l'arbre de façon à présenter une face cylindrique externe à proximité d'une face cylindrique interne du stator avec interposition d'un entrefer (E) de faible épaisseur, le rotor comportant un inducteur, à bobines de fil électrique (4), propre à engendrer par son excitation électrique un champ magnétique dans une pièce ferromagnétique annulaire (5) du stator constituant l'induit et associée à un circuit de refroidissement par liquide (6), et l'alimentation électrique des bobines (4) étant assurée à l'aide d'un alternateur polyphasé, notamment triphasé, dont l'induit (13) fait partie du rotor ci-dessus (2) et est connecté auxdites bobines (4) par l'intermédiaire d'un redresseur (18) faisant également partie du rotor (2), la couronne statorique composée par les pôles inducteurs (14) de l'alternateur entourant avec un faible jeu (e) l'induit rotorique (13) de cet alternateur et les deux couronnes rotoriques composées respectivement par les bobines inductrices (4) du ralentisseur et par l'induit (13) de l'alternateur étant juxtaposées axialement sur la face extérieure d'un même manchon intérieur (19) de relativement grand diamètre intérieur prolongé intérieurement par une bride de raccordement transversale (20), caractérisé en ce que la bride (20) est solidaire de l'une des deux mâchoires (33) d'un accouplement à cardan faisant partie de l'arbre (1, 1') et logé à l'intérieur du manchon (19), mâchoire elle-même montée en porte-à-faux sur l'extrémité d'un tronçon (1), dudit arbre, qui sort du carter (31) de la boite de vitesses du véhicule et est supporté par ce carter par l'intermédiaire de roulements (36, 37), en ce que le stator (3) est porté par une ossature ajourée en cloche (35) elle-même montée en porte-à-faux sur ledit carter (31) et en ce que le nombre des bobines inductrices (4) du ralentisseur et celui des pôles inducteurs (14) de l'alternateur sont tous deux supérieurs ou égaux à douze.

2. Ensemble selon la revendication 1, caractérisé en ce que l'extrémité axiale, du rotor (2) du ralentisseur, la plus éloignée du rotor (13) de l'alternateur, est prolongée axialement par une structure ailetée (23) de ventilation du stator (3) du ralentisseur.

## Ansprüche

1. Anordnung aus einer elektromagnetischen Bremse zum Bremsen der Antriebswelle (1, 1') eines Fahrzeuges und aus ihren elektrischen Versorgungsmitteln, mit einem Stator (3), der von der Welle durchsetzt ist, welche im Stator durch entsprechende Führungsmittel zentriert ist, und einem Rotor (2), der mit der Welle verbindbar ist, so daß seine zylindrische Außenseite nahe einer zylindrischen Innenseite des Stators unter Zwischenschaltung eines Luftspaltes (E) geringer Breite liegt, wobei der Rotor einen Erreger aus elektrischen Drahtspulen (4) aufweist, welcher bei seiner elektrischen Anregung ein magnetisches Feld in einem ringförmigen ferromagnetischen Statorteil (5) erzeugen kann, der den induzierten Teil darstellt und mit einem Flüssigkeitskühlkreis (6) verbunden ist, wobei die elektrische Versorgung der Spulen (4) mittels eines mehrphasigen, insbesondere dreiphasigen Wechselstromgenerators bewirkt ist, dessen Anker (13) einen Teil des Rotors (2) bildet und mit den Spulen (4) unter Zwischenschaltung eines ebenfalls einen Teil des Rotors (2) bildenden Gleichrichters (18) verbunden ist, wobei der Statorkranz, der durch die Induktionspole (14) des Wechselstromgenerators gebildet wird, den Rotoranker (13) des Wechselstromgenerators mit geringem Spiel (e) umgibt, und die beiden Rotorkränze, die durch die Induktionsspulen (4) der Bremse bzw. durch den Anker (13) des Wechselstromgenerators gebildet werden, an der Außenseite einer gemeinsamen inneren Muffe (19) relativ großen Innendurchmessers axial nebeneinanderliegen, die in ihrem Inneren durch einen sich in der Querrichtung erstreckenden Verbindungsflansch (20) fortgesetzt ist, dadurch gekennzeichnet, daß der Flansch (20) mit einer von zwei Backen (33) einer Kardankupplung verbunden ist, die einen Teil der Welle (1, 1') bildet und im Inneren der Muffe (19) angeordnet ist, wobei der Backen seinerseits am Ende eines Abschnittes (1) der Welle fliegend gelagert ist, der aus dem Gehäuse (31) des Fahrzeuggetriebes austritt und an diesem Gehäuse mit Hälfe von Wälzlagern (36, 37) abgestützt ist, daß der Stator (3) von einem durchbrochenen, glockenförmigen Traggestell (35) getragen ist, das seinerseits am Gehäuse (31) fliegend gelagert ist, und daß die Anzahl der Induktionsspulen (4) der Bremse und jene der Induktionspole (14) des Wechselstromgenerators jeweils größer oder gleich zwölf ist.

2. Anordnung nach Anspruch 1, dadurch gekennzeichnet, daß das axiale Ende des Rotors (2) der Bremse, das vom Rotor (13) des Wechselstromgenerators am weitesten entfernt ist, axial durch eine mit Ventilationsflügeln versehene Struktur (23) zur Belüftung des Stators (3) der Bremse verlängert ist.

## Claims

1. Assembly formed by an electromagnetic retarder, intended to brake the transmission shaft (1, 1') of a vehicle and by its electric supply means, comprising a stator (3) through which the shaft passes, which is centred in this stator by appropriate guide means and a rotor (2) fastenable with the shaft so as to present an external cylindrical face in the vicinity of an internal cylindrical face of the stator with interposition of an airgap (E) of small thickness, the rotor comprising an inductor, with electric wire coils (4), capable of generating, when electrically energized, a magnetic field in an annular ferromagnetic part (5) of the stator forming the armature and associated with a liquid cooling circuit (6), and the electric supply for the coils (4) being provided by means of a multiphase, particularly three phase, alternator, whose armature (13) forms part of the above rotor (2) and is connected to said coils (4) by means of a rectifier (18) also forming part of said rotor (2), the stator ring formed by the inductor poles (14) of the alternator surrounding the rotor armature (13) of this alternator with a small clearance (e) and the two rotor rings formed respectively by the inductor coils (4) of the retarder and by the armature (13) of the alternator being juxtaposed axially on the external face of a same inner sleeve (19) of relatively large inner diameter extended on the inside by a transverse connection flange (20), characterized in that the flange (20) is secured to one of the two jaws (33) of a cardan coupling comprised by the shaft (1,1') and housed inside the sleeve (19), said jaw being itself cantilevered to the end of a section (1), of said shaft, which projects from the casing (31) of the vehicle gearbox and is carried by said casing by means of bearings (36, 37), in that the stator (3) is carried by an apertured frame in the form of a bell (35) itself cantilevered to said casing (31) and in that the number of inductor coils (4) of the retarder and that of the inductor poles (14) of the alternator are both greater than or equal to twelve.

2. Assembly according to claim 1, characterized in that the axial end, of the rotor (2) of the retarder, the furthest from the rotor (13) of the alternator, is extended axially by a finned structure (23) for ventilation of the retarder stator (3).

FIG.1.

FIG.2.

FIG.3.